## Europäisches Patentamt
## European Patent Office
## Office européen des brevets

(11) Veröffentlichungsnummer: **0 191 879**
A1

(12) ## EUROPÄISCHE PATENTANMELDUNG

(21) Anmeldenummer: 85101788.9

(22) Anmeldetag: 19.02.85

(51) Int. Cl.⁴: **A 01 G 9/02**

(43) Veröffentlichungstag der Anmeldung:
27.08.86 Patentblatt 86/35

(84) Benannte Vertragsstaaten:
AT BE CH DE FR GB IT LI LU NL SE

(71) Anmelder: Helmers, Helmerich
Grüne Strasse 9
D-2910 Westerstede(DE)

(71) Anmelder: Ostendorf, Gerd
Vorm bütersten Door
D-2903 Bad Zwischenahn(DE)

(72) Erfinder: Helmers, Helmerich
Grüne Strasse 9
D-2910 Westerstede(DE)

(72) Erfinder: Ostendorf, Gerd
Vorm bütersten Door
D-2903 Bad Zwischenahn(DE)

(74) Vertreter: Jabbusch, Wolfgang, Dr.
Elisabethstrasse 6
D-2900 Oldenburg(DE)

(54) Verpackung für eine Pflanze.

(57) Eine Verpackung zur Aufnahme des Wurzelballens und gegebenenfalls des Pflanzerde-Substrats einer Pflanze ist als topfartiger Behälter (1) ausgebildet, welcher mit einem Deckel (7) verschließbar ist, der einen im wesentlichen zentrisch angeordneten Durchbruch für die Pflanze aufweist. Der Deckel weist einen vom Deckelrand bis zum Durchbruch verlaufenden Trennschnitt auf und ist in vorbestimmten Bereichen gelocht, damit die verpackte Pflanze bewässert und belüftet werden kann.

Fig. 1

EP 0 191 879 A1

9554/me/ol

Patentanmeldung

Herr Helmerich Helmers, Grüne Str. 9, 2910 Westerstede

Herr Gerd Ostendorf, Vorm bütersten Door, 2903 Bad Zwischen-

ahn/Ekern

Verpackung für eine Pflanze

Die Erfindung betrifft eine Verpackung zur Aufnahme des Wurzelballens und gegebenenfalls des Pflanzerde-Substrats einer Pflanze.

Mit Zierpflanzen wird zunehmend auch in Kaufhäusern, Supermärkten, Selbstbedingungsgeschäften und dergleichen gehandelt. Auch Versandhandel mit Pflanzen aller Art ist üblich. Bei derartigen Vertriebswegen erhalten die Pflanzen, bedingt durch ungünstige Lagerung, rauhe Transportbedingungen und so weiter, kaum sachgemäße Pflege, so daß die Pflanzen oftmals bereits geschädigt sind, bevor sie in die Hand des Endverbrauchers gelangen. Besonders gefährdet sind Pflanzen, deren Wurzelballen lediglich in ein sogenanntes Balliertuch oder Balliernetz eingeschlagen ist.

Der Erfindung liegt die Aufgabe zugrunde, eine Verpackung so auszubilden, daß Pflanzen unsachgemäße Behandlung und rauhe Transport- und Lagerbedingungen ohne schwerwiegende Schädigung

- 4 -

überstehen können.

Diese Aufgabe ist erfindungsgemäß gelöst worden durch einen topfartigen Behälter, welcher mit einem Deckel verschließbar ist, der einen im wesentlichen zentrisch angeordneten Durchbruch für die Pflanze aufweist.

Ein mit einem Deckel verschlossener Behälter, z.B. ein Topf kann den empfindlichen Wurzelbereich einer Pflanze aufnehmen und nach außen abkapseln. Der Wurzelballen und auch die Pflanzerde wird mit Vorteil über längere Zeit vor Austrocknung geschützt. Weiterhin ist der empfindliche Wurzelballen der Pflanze auch vor mechanischen Beschädigungen geschützt. Der Deckel ist entsprechend den jeweiligen Behälterabmessungen dimensioniert. Der Durchbruch im Deckel umschließt den Pflanzenstamm und ist derart bemessen, daß eine Beschädigung der Pflanze ausgeschlossen ist. Auch kann sich der Stamm, insbesondere von schnellwachsenden Jungpflanzen, ohne Behinderung noch weiter entwickeln. Die Deckelausbildung ist auch für Aufziehtöpfe geeignet.

Um Behälter, vorzugsweise Töpfe, mit bereits relativ großen und breiten Pflanzen, auch nachträglich, z.B. unmittelbar vor dem Versand, mit einem Deckel ausrüsten zu können, ist mit Vorteil vorgesehen, daß ein Trennschnitt vom Deckelrand bis zum Durchbruch verläuft. Der Deckel kann dadurch nach Art einer Manschette um den Stamm gelegt werden und den Topf verschließen.

Eine Weiterbildung der Erfindung sieht vor, daß der Rand des Durchbruches zum Deckelrand hin mehrfach eingeschnitten ist. Durch das Einschneiden des Durchbruchrandes kann sich der Durchbruch selbsttätig auch auf größere Durchmesser anpassen, so daß z.B. neue Triebe der Pflanze sich entwickeln und vergrößern können. Die Einschneidungen können auch als Sollbruchstellen ausgeführt sein.

Zur Bewässerung und zur Belüftung der Pflanze ist vorgesehen, daß der Deckel in vorbestimmten Bereichen gelocht ist.

Weiterhin ist vorgesehen, daß die gelochten Bereiche im Boden einer Deckelvertiefung angeordnet sind. Die Deckelvertiefung bildet in vorteilhafter Weise eine Art Wasserspeicher, aus dem nach der Pflanzenbewässerung der gespeicherte Wasservorrat langsam an den im Topf befindlichen Wurzelballen abgegeben wird.

Nach einer anderen Weiterbildung ist vorgesehen, daß der Rand des Deckels hochgezogen ist und einen den Öffnungsrand des Behälters, z.B. eines Topfes übergreifenden Wulst aufweist. Der Deckel wird auf den Öffnungsrand des Topfes mit dem Wulst aufgesteckt. Der Wulst ist dabei so ausgebildet, daß er den Öffnungsrand klemmend übergreift, so daß der Deckel auf dem Topf ausreichend fest gehalten wird. Der hochgezogene Rand hat den Vorteil, daß der den Topf verschließende Deckel gegenüber dem Öffnungsrand vertieft angeordnet ist, so daß der Deckel mit Wasser zum Bewässern der Pflanze gefüllt werden kann und somit ebenfalls als Wasserspeicher dient.

Zum besseren Verschließen des Behälters mit dem Deckel ist nach einer weiteren Weiterbildung vorgesehen, daß der Öffnungsrand des Behälters und der Wulst des Deckelrandes gegenseitig verrastbare Arretierungsmittel aufweisen. Als Arretierungsmittel können z. B. jeweils miteinander korrespondierende Verdikkungen und Vertiefungen, wie Rastnasen oder dergleichen, sowohl am Deckel als auch am Behälter angeformt sein.

Damit eine Pflanze aus dem Behälter ohne Beschädigung des Wurzelballens entnommen werden kann, ist vorgesehen, daß in den Behälter ein den Innenraum auskleidender Einsatz vorzugsweise aus organischem, verrottbaren Material einsetzbar ist. Die bereits in dem Einsatz aufgezogene Pflanze wird dabei zusammen mit dem Einsatz in den Behälter eingesetzt und, mit dem Beckel verschlossen, zum Versand und Verkauf gebracht. Der Endverbraucher entfernt Deckel und Behälter und kann dann die Pflanze mit dem Einsatz z.B. im Garten einpflanzen.

Weiterhin ist vorgesehen, daß der Werkstoff für den Behälter und den Deckel dünnwandiger Kunststoff ist. Dieser Werkstoff ermöglicht eine rationelle und kostengünstige Fertigung der Verpackung.

Ein Ausführungsbeispiel der Erfindung, aus dem sich weitere erfinderische Merkmale ergeben, ist in der Zeichnung dargestellt. Es zeigen:

Fig. 1   eine Schnittansicht eines als Topf ausgebildeten Behälters und eines darüber angeordneten Deckels und

- 7 -

- 5 -

Fig. 2  eine Draufsicht auf den Deckel
gemäß Fig. 1.

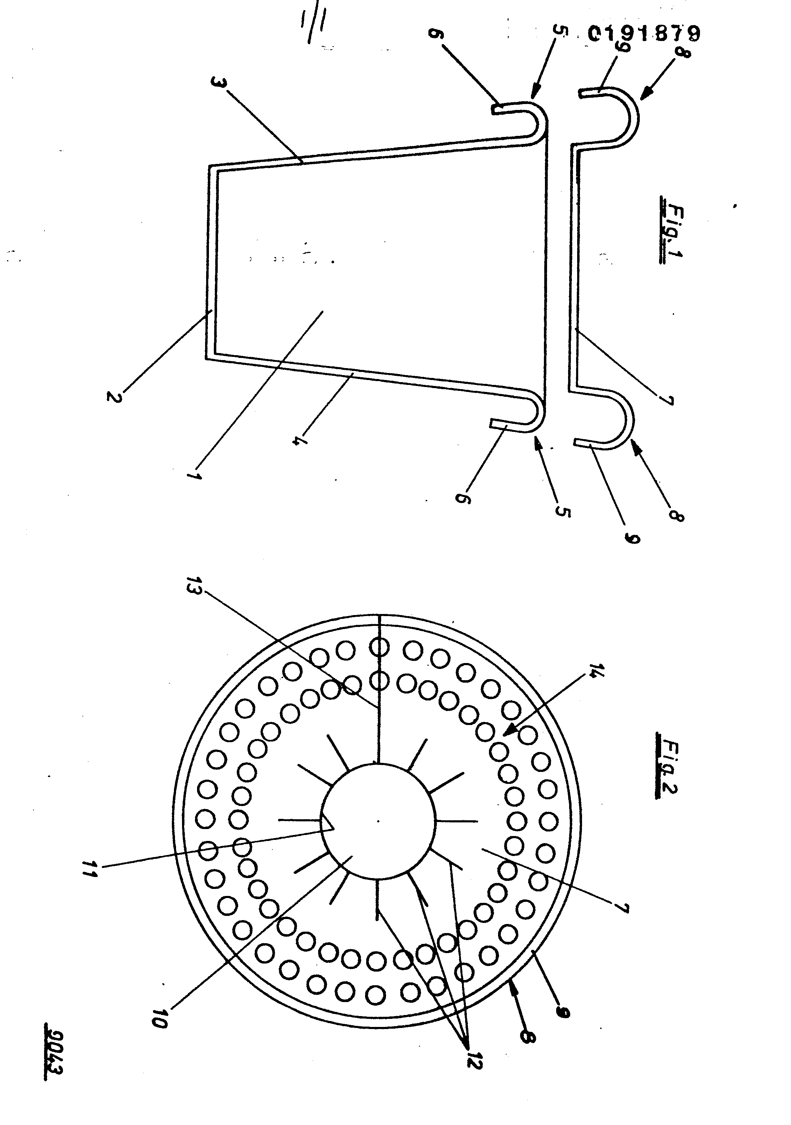

Gemäß Fig. 1 ist der Behälter als runder Topf 1 mit konisch zum Boden 2 sich verjüngenden Seitenwänden 3,4, ausgebildet. Der Öffnungsrand 5 des Topfes 1 hat einen zum Boden 2
nach außen zurückgebogenen Randwulst 6. Über dem Öffnungsrand
5 des Topfes 1 befindet sich ein Deckel 7 zum Verschließen des
Topfes. Der Deckelrand 8 ist hochgezogen und weist einen den
Öffnungsrand 5 des Topfes 1 übergreifenden, umlaufenden Wulst
9 auf.

Der Deckel hat, wie in Fig. 2 dargestellt, im Zentrum einen Durchbruch 10, durch den eine Pflanze hindurchwachsen oder
hindurchgesteckt werden kann. Der Rand 11 des Durchbruches 10
ist zum Deckelrand 8 hin mehrfach eingeschnitten. Die Einschneidungen 12 dienen zum einfachen nachträglichen Vergrößern
des Durchbruches. Weiterhin weist der Deckel einen Trennschnitt 13 auf, der vom Deckelrand 8 bis zum Durchbruch 10 verläuft. Durch den Trennschnitt kann der vorzugsweise aus dünnwandigem Kunststoff gefertigte Deckel 7 aufgebogen und nach
Art einer Manschette um den Stamm einer in einem Topf 1 befindlichen Pflanze gelegt werden. In einem vorbestimmten Abstand
vom Rand weist der Deckel 7 einen gelochten Bereich 14 auf.
Der gelochte Bereich läßt auf den Deckel gegossenes Wasser
durch und sorgt auch für die ausreichende Belüftung einer
Pflanze.

.

Der Deckel 7 kann Töpfe 1 verschließen, die bereits mit einer Pflanze versehen sind. Die Pflanze kann z.B. ein relativ kleiner Setzling oder auch eine relativ große Pflanze mit dik-, kem Stamm sein. Beim Verschließen des Topfes 1 mit dem Deckel 7 übergreift der Deckelrand 8 mit dem Wulst 9 den Randwulst 6 des Öffnungsrandes 5 des Topfes 1 und klemmt sich fest. Es sind Arretierungsmittel (nicht dargestellt) am Wulst 9 vorgesehen, die den Randwulst 6 des Topfes 1 hintergreifen und sich gegenseitig verrasten.

**Ansprüche:**

1. Verpackung zur Aufnahme des Wurzelballens und gegebenenfalls des Pflanzerde-Substrats einer Pflanze, g e k e n n z e i c h n e t   d u r c h , einen topfartigen Behälter (1), welcher mit einem Deckel (7) verschließbar ist, der einen im wesentlichen zentrisch angeordneten Durchbruch (10) für die Pflanze aufweist.

2. Verpackung nach Anspruch 1, dadurch gekennzeichnet, daß ein Trennschnitt (13) vom Deckelrand (8) bis zum Durchbruch (10) verläuft.

3. Verpackung nach einem der Ansprüche 1 und 2, dadurch gekennzeichnet, daß der Rand (11) des Durchbruches (10) zum Deckelrand (8) hin mehrfach eingeschnitten ist.

4. Verpackung nach einem der vorhergehenden Ansprüche, dadurch gekennzeichnet, daß der Deckel (7) in vorbestimmten Bereichen gelocht ist.

5. Verpackung nach Anspruch 4, dadurch gekennzeichnet, daß die gelochten Bereiche im Boden einer Deckelvertiefung angeordnet sind.

6. Verpackung nach einem der Ansprüche 1 - 5, dadurch gekennzeichnet, daß der Deckelrand (8) hochgezogen ist und einen den Öffnungsrand (5) des Behälters (1) übergreifenden Wulst

- 2 -

(9) aufweist.

7. Verpackung nach Anspruch 6, dadurch gekennzeichnet, daß der Öffnungsrand (5) des Behälters (1) und der Wulst (9) des Deckelrandes (8) gegenseitig verrastbare Arretierungsmittel aufweisen.

8. Verpackung nach einem der vorhergehenden Ansprüche, dadurch gekennzeichnet, daß in den Behälter (1) ein den Innenraum auskleidender Einsatz vorzugsweise aus organischem, verrottbaren Material einsetzbar ist.

9. Verpackung nach einem der vorhergehenden Ansprüche, dadurch gekennzeichnet, daß der Werkstoff für den Behälter (1) und den Deckel (7) dünnwandiger Kunststoff ist.

Fig. 1

Fig. 2

0191879

9043

**Europäisches Patentamt**

# EUROPÄISCHER RECHERCHENBERICHT

EP  85 10 1788

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-3 961 443  (INSALACO)  <br><br>*  Abbildungen  1-6;  Ansprüche 1,3,4;  Spalte  2,  Zeile  61  – Spalte 3, Zeile 12 * | 1,2,4-7,9 | A 01 G   9/02 |
| Y | | 3,8 | |
| | --- | | |
| X | US-A-4 369 598  (BECKWITH)  <br><br>*  Abbildungen  4-6,9;  Spalte 2, Zeilen  45-50;  Spalte  3, Zeilen 41-56; Ansprüche 8,9 * | 1-3,6,7,9 | |
| | --- | | |
| X | GB-A-  891 078  (PRINS LTD.)  <br>*  Abbildungen  1-3;  Seite  2, Zeilen 15-45; Anspruch 1 * | 1,4,6 | |
| | | | **RECHERCHIERTE SACHGEBIETE (Int. Cl.4)** |
| Y | | 3 | A 01 G |
| | --- | | |
| Y | DE-C-  342 376  (SEESER)  <br>*  Seite  2,  Zeilen  16-55; Ansprüche 1-4; Abbildungen 1-10 * | 8 | |
| | ----- | | |

Der vorliegende Recherchenbericht wurde für alle Patentansprüche erstellt.

| Recherchenort <br>DEN HAAG | Abschlußdatum der Recherche <br>11-10-1985 | Prüfer <br>MEINDERS H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82